(19) Europäisches Patentamt
European Patent Office
Office européen des brevets

(11) **EP 3 916 999 A1**

(12) **EUROPEAN PATENT APPLICATION**

(43) Date of publication:
01.12.2021 Bulletin 2021/48

(51) Int Cl.:
*H02P 21/14* (2016.01)　　　　*H02P 23/14* (2006.01)
*G05B 13/02* (2006.01)

(21) Application number: 21173036.1

(22) Date of filing: 10.05.2021

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.05.2020 JP 2020092062

(71) Applicant: **Kabushiki Kaisha Yaskawa Denki
Kitakyushu-shi, Fukuoka 806-0004 (JP)**

(72) Inventor: **HAGIHARA, Jun
Kitakyushu-shi, 806-0004 (JP)**

(74) Representative: **Grünecker Patent- und
Rechtsanwälte
PartG mbB
Leopoldstraße 4
80802 München (DE)**

(54) **WAVEFORM CONTROLLER TO OPERATE MACHINE**

(57) A machine control system includes a waveform storage unit configured to store a second waveform that is generated by exponentiating a first waveform by a real number, and a machine control unit configured to operate a machine based on the second waveform. The first waveform represents a command of an operation of the machine. The real number has a value other than 0 and 1.

**Fig.1**

## Description

## BACKGROUND

Field

One aspect of the present disclosure relates to a machine control system, a waveform generation device, a waveform generation method, and a waveform generation program.

Description of the Related Art

Japanese Patent Publication No. 2008-236990 A describes a motor control device including a parameter identification unit configured to identify a motor parameter based on a response of a motor in a case where a motor drive signal to which an M-series signal is added is applied to the motor.

## SUMMARY

It is desirable to generate an appropriate command signal for operating a machine.

A machine control system according to an aspect of the present disclosure includes a waveform storage unit configured to acquire a second waveform generated by exponentiating a first waveform representing a command of an operation of a machine by a real number k other than 0 and 1; and a machine control unit configured to operate the machine based on the second waveform.

In some examples, the machine control system is combined with the machine to form an assembly.

A waveform generation method according to an aspect of the present disclosure is a waveform generation method executed by a waveform generation device comprising at least one processor, the method including: generating a second waveform by exponentiating a first waveform representing a command of an operation of a machine by a real number k other than 0 and 1; and storing the second waveform into a storage.

A waveform generation program according to an aspect of the present disclosure causes a computer to execute: generating a second waveform by exponentiating a first waveform representing a command of an operation of a machine by a real number k other than 0 and 1; and storing the second waveform into a storage.

According to an aspect of the present disclosure, it is possible to generate an appropriate command signal for operating a machine

## BRIEF DESCRIPTION OF THE DRAWINGS

FIG. 1 is a diagram showing an example configuration of an assembly including a machine control system and a machine.

FIG. 2 is a diagram showing an example of a hardware configuration of a computer used in the machine control system.

FIG. 3 is a flowchart showing an example processing flow of the machine control system.

FIG. 4 illustrates graphs showing examples of generating a second waveform from a first waveform.

## DETAILED DESCRIPTION

Hereinafter, examples of the present disclosure will be described in detail with reference to the accompanying drawings. In the following description, with reference to the drawings, the same reference numbers are assigned to the same components or to similar components having the same function, and overlapping description is omitted.

System overview

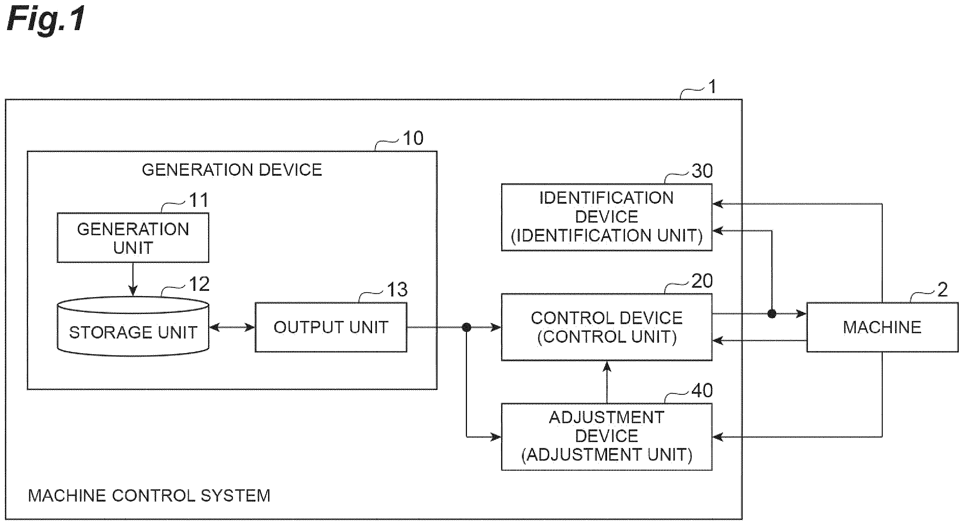

With reference to FIG. 1, a machine control system 1 according to the present disclosure may include a computer system for controlling a machine 2. The machine may include a device that receives power, performs predetermined operations according to a purpose, and executes useful work. Examples of machine 2 include, but are not limited to, any type of robot and any type of machine tool. The machine control system 1 may be used to control any machine.

The machine control system 1 outputs to the machine 2, a command signal for controlling the machine 2. The machine 2 operates based on the command signal. The command signal refers to a data signal indicating a command for controlling the machine 2. Examples of the command signal include, but are not limited to, a torque command and a current command.

In some examples, the machine control system 1 outputs a command signal including all frequency components for at least one of system identification and gain adjustment. Conventional techniques for generating this command signal include chirp signals and M-series signals. However, when these special signals are used, it is necessary to set parameters such as a frequency range, an input time, and an amplitude by trial and error. Such settings complicate preparation of the command signal for system identification or gain adjustment and require expert knowledge. Further, in the conventional techniques, the operation sound of the machine becomes noisy, which may cause stress to a user of the machine 2 (for example, the user may feel anxiety that the machine 2 may be broken). The example machine control system 1 outputs a command signal including all frequency components by a method that is different from the conventional techniques.

System configuration

FIG. 1 illustrates an example assembly including the machine control system 1 and the machine 2. The machine control system 1 is connected to the machine 2. FIG. 1 shows one machine 2. In other examples, the machine control system 1 may be connected to a plurality of machines 2.

In some examples, the machine control system 1 includes a generation device 10, a control device 20, an identification device 30, and an adjustment device 40. The generation device 10 provides a signal waveform including all frequency components to the control device 20. The signal waveform refers to information indicating a chronological change of a signal used to control a machine, and for example, refers to information indicating a chronological change of a physical property that is quantified by the signal. In the present disclosure, "signal waveform" may also be referred to as "waveform". The generation device 10 is an example of a waveform generation device. The control device 20 controls the machine 2 based on the signal waveform. For example, the control device 20 operates the machine 2 based on the signal waveform. In some examples, the control device 20 executes feedback control based on a response from machine 2. The control device 20 is an example of a functional module that may be referred to as a control unit or machine control unit. The identification device 30 identifies a machine characteristic value indicating a characteristic of a machine. In the present disclosure, the process of identifying the machine characteristic value is also referred to as "system identification". The identification device 30 is an example of a functional module that may be referred to as an identification unit or system identification unit. The adjustment device 40 is a device for adjusting a gain used for controlling the machine 2 by the control device 20. Gain refers to a parameter related to the response of the machine to the command. In the present disclosure, the process of adjusting the gain is also referred to as "gain adjustment". The adjustment device 40 is an example of a functional module that may also be referred to as an adjustment unit or gain adjustment unit.

FIG. 1 also shows an example of a functional configuration of the generation device 10. The generation device 10 includes a generation unit 11, a storage unit 12, and an output unit 13. The generation unit 11 is a functional module (e.g., waveform generation unit) that generates a signal waveform including all frequency components. The storage unit 12 is a functional module (e.g., waveform storage unit) that temporarily or non-temporarily stores the signal waveform. The output unit 13 is a functional module that outputs the signal waveform to the control device 20.

A computer that functions as the device constituting the machine control system 1 may be a general-purpose computer such as a personal computer or a business server, or may be incorporated in a dedicated device that executes specific processing.

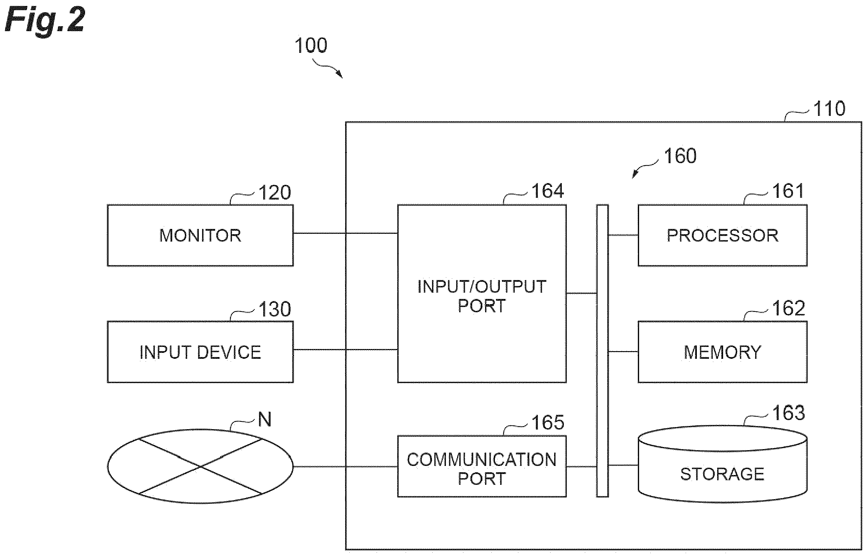

FIG. 2 is a diagram illustrating an example of a hardware configuration of a computer 100 used in the machine control system 1. In this example, the computer 100 includes a body 110, a monitor 120, and an input device 130.

The body 110 is a device that executes main functions of the computer. The body 110 includes circuitry 160, and the circuitry 160 includes at least one processor 161, a memory 162, a storage 163, an input/output port 164, and a communication port 165. The storage 163 stores a program for operating the functional modules of the body 110. The storage 163 is a computer-readable recording medium such as a hard disk, a nonvolatile semiconductor memory, a magnetic disk, or an optical disk. The memory 162 temporarily stores a program loaded from the storage 163, an operation result of the processor 161, and the like. The processor 161 executes a program in cooperation with the memory 162 to operate the functional modules. The input/output port 164 transmits electrical signals to and from the monitor 120 or the input device 130, in response to a command from the processor 161. In some examples, the input/output port 164 may input or output an electrical signal to and from another device. The communication port 165 performs data communication with another device via the communication network N in accordance with a command from the processor 161.

The monitor 120 is a device for displaying information output from the body 110. The monitor 120 may be of any type as long as it can display graphics, and one example thereof is a liquid crystal panel.

The input device 130 is a device for inputting information to the body 110. The input device 130 may be any device as long as desired information can be input, and examples thereof include an operation interface such as a keypad, a mouse, and an operation controller.

The monitor 120 and the input device 130 may be integrated as a touch panel (e.g., a touchscreen). In some examples, the body 110, the monitor 120, and the input device 130 may be integrated into a single device such as a tablet computer.

Machine control method and waveform generation method

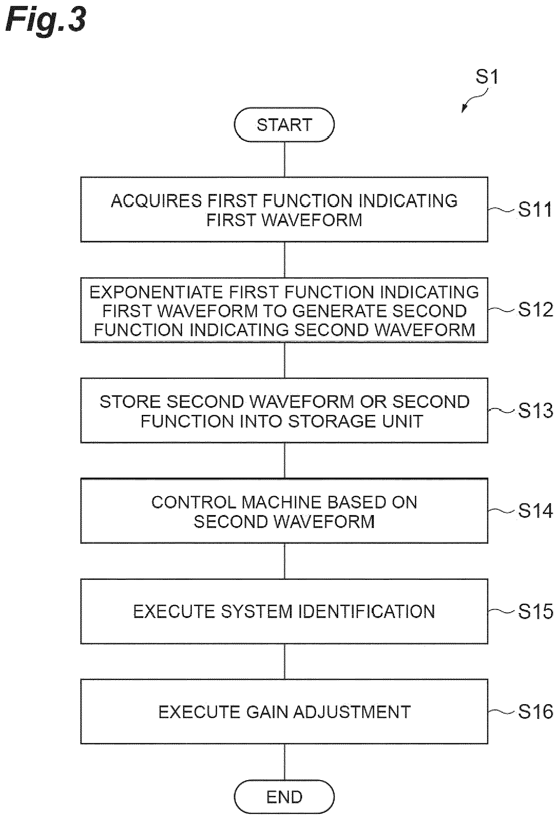

As an example of the machine control method and the waveform generation method according to the present disclosure, an example of a series of processing procedures executed by the machine control system 1 will be described with reference to FIG. 3. FIG. 3 is a flowchart showing an example of a process that is carried out by the machine control system 1 as a processing flow S1. That is, the machine control system 1 executes the processing flow S1.

In operation S11, the generation unit 11 of the generation device 10 acquires a first function indicating a first waveform. The first waveform is a signal waveform representing a command for operating the machine 2 (e.g., a command of operation of the machine 2). In some examples, the first waveform is not a signal waveform used to execute initialization or adjustment of machine 2, but is a signal waveform used to cause machine 2 to actually perform useful work. That is, the first waveform is not a signal waveform for maintenance but a signal waveform for a normal operation of the machine 2. Alternatively, the first waveform may be a signal waveform used to execute system identification or gain adjustment. For example, the first waveform may be a dedicated signal waveform for executing system identification or gain adjustment in a short time, or for narrowing the operation range of the machine 2 in the execution. In such a first waveform, a part of frequency components equals 0, that is, the first waveform does not include all frequency components. The first function refers to a mathematical expression of the first waveform, and indicates a relationship between a plurality of variables (for example, a relationship between time and position) related to a command to the machine 2. In some examples, the first waveform (first function) represents a chronological change of the position of machine 2, in other words, represents a command for determining the position of machine 2. The position of the machine may correspond to a position of a component of the machine or to a position (e.g., configuration or location) of the machine itself.

Any method may be used to acquire the first function. For example, the generation unit 11 may acquire the first function input by the user, receive the first function from another computer, or read the first function stored in advance in a predetermined storage device (for example, the storage 163). Alternatively, the generation unit 11 may acquire the first waveform by any method and analyze the first waveform to identify the first function. In some examples, the generation unit 11 may acquire a basic waveform (in other words, a basic function indicating the basic waveform) indicating the degree of change in the position of the machine 2, and integrate the basic waveform (basic function) to generate a first waveform (first function). The generation unit 11 may therefore function as an integration unit. The basic function is a derivative of the first function. In some examples, the basic waveform (basic function) represents at least one of velocity, acceleration, and jerk of the machine 2, and may for example, represent a chronological change in velocity, acceleration, and jerk of the machine 2.

In operation S12, the generation unit 11 exponentiates the first function indicating the first waveform by a real number k to generate a second function indicating a second waveform. In the present disclosure, this processing may also be referred to as "exponentiating the first waveform by a real number k to generate a second waveform". Like the first waveform, the second waveform is also a signal waveform representing a command for operating the machine 2. However, the second waveform is different from the first waveform in that it includes all frequency components. The real number k is a value other than 0 and 1. As long as it is different from 0 and 1, any numerical value may be used as the real number k. In some examples, the real number k is set to 0.5 or more.

In some examples, the generation unit 11 may execute the exponentiation after normalizing the first waveform (first function). For example, the generation unit 11 normalizes the first waveform (first function) based on a target value of the machine 2. In the present disclosure, normalization refers to a process of transforming a signal waveform (function) such that a value of a dependent variable of the signal waveform (function) falls within a given numerical range. The target value of the machine 2 quantifies a physical property indicating a final state of the machine 2 to be reached by machine 2 during operation. For example, the target value may indicate a final position of the machine 2 (also referred to as a "target position"). The original first waveform (first function) indicates the target value. Since the target value can take various numerical values, the generation unit 11 simplifies the calculation by the normalization. For example, the generation unit 11 may normalize the first waveform (first function) so as to change the target value to 1. The generation unit 11 exponentiate the normalized first function by the real number k, to generate an intermediate waveform (in other words, an intermediate function representing the intermediate waveform). The generation unit 11 then generates a second waveform (second function) based on the intermediate waveform (intermediate function) and the target value of the machine 2. The second waveform (second function) indicates the target value. This series of processes including the normalization is represented by, for example, the following equation (1).

$$f\_new(t) = D * (f(t) / D)^k \qquad ...(1)$$

Where f(t) denotes the first function indicating the chronological change of the position of the machine 2, D denotes the target value of the machine 2, and f new(t) denotes the second function indicating the chronological change of the position of the machine 2.

In another example, the generation unit 11 may exponentiate the first function by the real number k to generate the second waveform (second function), without executing the above-mentioned normalization. For example, the generation unit 11 may generate the second function f new(t) by exponentiating the first function f(t) by the real number k and multiplying the result by D / $D^k$. That is, the generation unit 11 may generate the second waveform (second function) according to the following equation (2).

$$f\_new(t) = D / D^k * f(t)^k \qquad ...(2)$$

Regardless of whether or not the first waveform (first function) is normalized, the exponentiation of the first function can be expressed by the following equation (3). That is, the exponentiation of the first function can be represented using an exponential function and a natural logarithm.

$$f(t)^k = \exp \{k * \ln (f(t))\} \qquad ...(3)$$

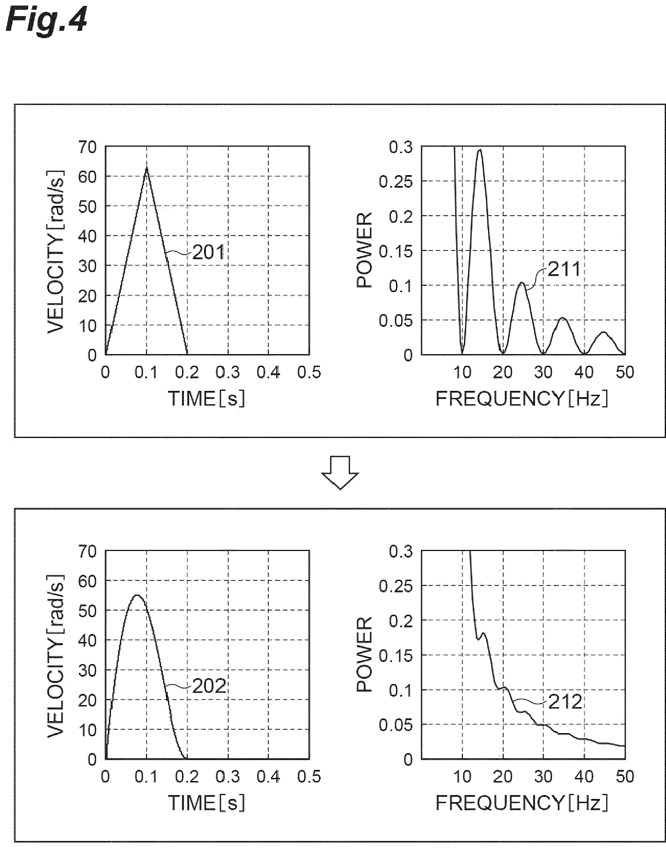

FIG. 4 shows an example of generating the second waveform (second function) from the first waveform (first function). In this example, both the first waveform (first function) and the second waveform (second function) indicate the chronological change of the position of the machine 2. A waveform 201 is represented by the first derivative of the first function and thus represents a chronological change in velocity of the machine 2. As is clear from frequency characteristics 211 of the waveform 201, there are frequencies (10 Hz, 20 Hz, 30 Hz, 40 Hz, and 50 Hz) at which the power is 0 in the first waveform (first function). That is, the first waveform does not include part of frequency components.

A waveform 202 is represented by the first derivative of the second function obtained by exponentiating the first function by the real number k. The waveform 202 also shows the chronological change in velocity of the machine 2. As is apparent from frequency characteristics 212 of the waveform 202, the second waveform (second function) includes all frequency components. That is, the generation unit 11 generates the second waveform (second function) such that the derivative of the second function includes all frequency components.

As can be seen from the comparison of the waveforms 201 and 202, the time when the velocity of machine 2 reaches 0, i.e., the time when the machine 2 reaches the target value, does not change between the first waveform (first function) and the second waveform (second function). This means that the generation unit 11 generates the second waveform (second function) including all frequency components without changing an operating time and a travel distance of the machine 2. That is, the generation unit 11 can generate a signal waveform including all frequency components without changing an originally intended operation of the machine 2.

If the second function indicates a chronological change in the position of the machine 2, a dependent variable (velocity, acceleration, or jerk) of the derivative starts at 0 and ends at 0. In the example of FIG. 4, since the velocity returns to 0 only when the machine 2 reaches the target value, the second waveform indicating the position of the machine 2 shows a monotonic increase. However, the second waveform is not limited to a monotone increase. In any case, the generation unit 11 can generate the second waveform (second function) including all frequency components even when the first waveform (first function) indicates a mixture of various operations of the machine 2 in normal operation (for example, any combination of two or more selected from acceleration, deceleration, constant speed, and temporary stop).

Referring back to FIG. 3, in operation S13, the generation unit 11 stores the second waveform or the second function into the storage unit 12. As a result, the storage unit 12 stores the second waveform or the second function. The generation unit 11 may store information indicating the second waveform itself or may store the second function. Since the second function indicates the second waveform, storage of the second function is an example of storage of the second waveform.

In operation S14, the control device 20 controls the machine 2 based on the second waveform. For example, the output unit 13 of the generation device 10 reads the second waveform (second function) from the storage unit 12 and transmits the second waveform (second function) to the control device 20. In some examples, the second waveform (second function) represents a chronological change of the position of the machine 2, and thus can be said to be a position command. The control device 20 generates a command signal (e.g., a torque command based on a position command) for operating the machine 2 based on the second waveform, and transmits the command signal to the machine 2. The machine 2 operates according to the command signal.

In operation S15, the identification device 30 executes the system identification. The identification device 30 acquires the command signal transmitted from the control device 20, and a response value indicating the operation of the machine 2 according to the command signal. The response value is an output from the machine 2 that quantifies a physical property indicating a response of the machine 2 to the command. The response refers to operation or state of the machine 2. The operation or state may be represented by any data item, for example, at least one of position, posture, velocity, acceleration, torque, force, and current value. The response value may be acquired by any method. For example, the identification device 30 may acquire various sensor data of the machine 2 as a response value. Examples of the type of sensor may include various sensors such as a position sensor (for example, an encoder), a velocity sensor, an acceleration sensor, a voltage sensor, a current sensor, a temperature sensor, a gyro sensor, a camera, a pressure sensor, and a time-of-flight (ToF) sensor. Alternatively, the identification device 30 may acquire feedback data or data indicating a change in command in the control loop.

In some examples, the identification device 30 identifies the machine characteristic value based on the command signal and the response value. Accordingly, the identification device 30 may execute the system identification operation based on the second waveform that includes all frequency components. The identification device 30 may identify any suitable machine characteristic value. For example, identification device 30 may identify at least one of inertia (moment of inertia), viscous friction coefficient, stiffness, resonant frequency, anti-resonant frequency, and constant disturbance (e.g., viscous friction, Coulomb friction, gravity, etc.).

At the time of identification, the control device 20 may perform only feedforward control without performing feedback control. For example, the control device 20 may differentiate the position command twice, multiply the differentiation result by inertia to generate a torque command signal, and use the torque command signal as a command signal. Alternatively, the generation device 10 may provide, as the second waveform, the torque command obtained by multiplying the acceleration command by the inertia, and the control device 20 may input, to the machine 2, the second waveform as it is as the command signal.

The identification device 30 outputs the identified machine characteristic value by any suitable method. In some examples, the identification device may output the machine characteristic value on the monitor 120, store the value into the storage 163, or transmit the value to another computer.

In operation S16, the adjustment device 40 executes the gain adjustment. The adjustment device 40 acquires the second waveform (second function, e.g., the position command) transmitted from the output unit 13 and a response value indicating an operation of the machine 2 based on the second waveform. The adjustment device 40 can acquire the response value similarly to the identification device 30. In some examples, the adjustment device 40 adjusts gain based on the second waveform and the response value. This means that the identification device 30 executes the gain adjustment based on the second waveform including all frequency components. The adjustment device 40 may adjust any kind of gain. As an example, the adjustment device 40 adjusts a proportional gain Kp, an integral gain Ki and a derivative gain Kv in a PID control. The adjustment device 40 transmits the adjusted gain to the control device 20 to adjust the operation of the control device 20 such that the control device 20 obtains desired characteristics (e.g., controls the machine 2 as quickly as possible while suppressing vibration).

The system identification (operation S15) and the gain adjustment (operation S16) are not necessarily carried out. Depending on examples, the machine control system 1 may execute only one of these two processes or may execute neither of them.

Program

Each functional module of the machine control system 1 is realized by reading a machine control program on the processor 161 or the memory 162 and causing the processor 161 to execute the program. The machine control program includes code (e.g., code language in the form of data and instructions) for implementing each functional module of the machine control system 1. The processor 161 operates the input/output port 164 or the communication port 165 according to the machine control program, and executes reading and writing of data in the memory 162 or the storage 163. Each functional module of the machine control system 1 is realized by such processing.

In some examples, the machine control program includes code corresponding to the generation device 10 (waveform generation program), code corresponding to the control device 20, code corresponding to the identification device 30, and code corresponding to the adjustment device 40. Such code may be distributed among a plurality of computers.

The machine control program may be provided as stored on a non-transitory recording medium such as a CD-ROM, a DVD-ROM, or a semiconductor memory. Alternatively, the machine control program may be provided as a data signal superimposed on a carrier wave via a communication network.

As described above, a machine control system according to an aspect of the present disclosure includes a waveform storage unit configured to acquire a second waveform generated by exponentiating a first waveform representing a command of an operation of a machine by a real number k other than 0 and 1; and a machine control unit configured to operate the machine based on the second waveform.

A waveform generation method according to an aspect of the present disclosure is a waveform generation method executed by a waveform generation device comprising at least one processor, the method including: generating a second waveform by exponentiating a first waveform representing a command of an operation of a machine by a real number k other than 0 and 1; and storing the second waveform into a storage.

A waveform generation program according to an aspect of the present disclosure causes a computer to execute: generating a second waveform by exponentiating a first waveform representing a command of an operation of a machine by a real number k other than 0 and 1; and storing the second waveform into a storage.

In such aspects, the exponentiation causes all frequency components to be included in a command itself, so as to obtain an appropriate command signal for operating a machine. In addition, by using the command signal, an operation sound of the machine may be reduced, as compared with using a conventional signal such as a chirp signal or an M-series signal.

In the machine control system according to another aspect, the real number k may be 0.5 or more, to prevent a sudden change of the command.

In the machine control system according to another aspect, the system may further include a waveform generation unit configured to generate the second waveform based on the first waveform and store the generated second waveform into the waveform storage unit. In this case, the second waveform including all frequency components can be generated from any first waveform.

In the machine control system according to another aspect, t the waveform generation unit is further configured to: normalize the first waveform based on a target value of the machine; exponentiate the normalized first waveform by the real number k to generate an intermediate waveform; and generate the second waveform based on the intermediate waveform and the target value. The second waveform can be easily calculated by exponentiating a waveform from which a specific target value has been removed by normalization and applying the target value to a waveform (intermediate waveform) obtained from the exponentiating, so as to generate the command signal in a shorter time.

In the machine control system according to another aspect, the waveform generation unit may be further configured to: normalize the first waveform by dividing the first waveform by the target value; and generate the second waveform by multiplying the intermediate waveform by the target value.

In the machine control system according to another aspect, the waveform generation unit may be further configured to: exponentiate the first waveform by the real number k to generate an intermediate waveform; calculate a ratio of a target value of the machine to a value obtained by exponentiating the target value by the real number k; and multiply the intermediate waveform by the ratio to generate the second waveform.

In the machine control system according to another aspect, the waveform generation unit may be further configured to generate the second waveform such that a derivative of the second waveform includes all frequency components. In this case, all frequency components are included in a waveform (for example, a waveform directly or indirectly representing a movement of a motor) related to an operation of a component for changing a machine position. An appropriate command signal can be obtained by using the second waveform whose derivative has such a property. As a result, an operation sound of the machine can be reduced, for example.

In the machine control system according to another aspect, the waveform generation unit may be further configured to generate the second waveform based on the first waveform in which part of frequency components are 0.

In the machine control system according to another aspect, the part of frequency components may include a plurality of frequency components of the first waveform that equal 0, and the waveform generation unit may be further configured to generate the second waveform based on the first waveform in which the plurality of frequency components are 0.

In the machine control system according to another aspect, the the waveform generation unit may be further configured to generate the second waveform based on the first waveform, the first waveform may represent a chronological change of a position of the machine, and part of frequency components in a first derivative of the first waveform may be 0.

In the machine control system according to another aspect, the waveform generation unit may be further configured to generate the second waveform without changing an operating time and a travel distance of the machine indicated by the first waveform.

In the machine control system according to another aspect, each of the first waveform and the second waveform may represent a chronological change of a position of the machine, and the machine control unit may be further configured to operate the machine based on the second waveform, for example by varying the position of the machine according to the second waveform (e.g., varying a position of a component of the machine, varying a configuration or location of the machine itself, etc.). In this case, an appropriate command signal for controlling a machine position can be generated.

In the machine control system according to another aspect, the system may further include an integration unit configured to integrate a basic waveform representing at least one of velocity, acceleration, and jerk of the machine to generate the first waveform. In this case, the second waveform can be obtained using a command related to velocity, acceleration, or jerk.

In the machine control system according to another aspect, the system may further include a system identification unit configured to identify a machine characteristic value indicating a characteristic of the machine, based on a response value indicating the operation of the machine. By using a response value based on the second waveform, the characteristics of the machine may be identified in consideration of all frequency components while reducing an operation sound of the machine by the machine control unit.

In the machine control system according to another aspect, the system identification unit may identify the machine characteristic value based on the second waveform and the response value.

In the machine control system according to another aspect, the system may further include a gain adjustment unit configured to adjust a gain used for control by the machine control unit, based on a response value indicating the operation of the machine by the machine control unit. By using a response value based on the second waveform, a gain may be adjusted in consideration of all frequency components while reducing an operation sound of the machine.

In the machine control system according to another aspect, the gain adjustment unit may be further configured to adjust the gain based on the second waveform and the response value.

According to another example, the machine control system may be combined with the machine to form an assembly.

Additional Examples

It is to be understood that not all aspects, advantages and features described herein may necessarily be achieved by, or included in, any one particular example. Indeed, having described and illustrated various examples herein, it should be apparent that other examples may be modified in arrangement and detail is omitted.

For example, the configuration of the machine control system is not limited to the above examples. For example, the identification device 30 and the adjustment device 40 are not essential in the machine control system, and at least one of these devices may belong to another computer system. In some examples, the machine control system 1 may not include the generation unit 11, and in this case, the storage unit 12 may store a second waveform or a second function generated in another computer system. Any two or more among the generation device 10, the control device 20, the identification device 30, and the adjustment device 40, may be integrated into a single device or apparatus.

The hardware configuration of the system is not limited to an example in which each functional module is realized by executing a program. For example, at least a part of the functional modules described above may be configured by logic circuitry specialized for the function, or may be configured by an application specific integrated circuit (ASIC) in which the logic circuitry is integrated.

A processing procedure of the method executed by at least one processor is not limited to the above examples. For example, some of the above-described operations (processes) may be omitted, or the operations may be executed in a different order. Further, two or more of the above-described operations may be combined, or a part of the operations may be modified or deleted. Alternatively, other operations may be executed in addition to the above operations.

In a case where the magnitude relationship between two numerical values is compared in a computer system or a computer, either of two criteria "greater than or equal to" and "greater than" may be used, and either of two criteria "less than or equal to" and "less than" may be used. The selection of such a criterion may be used to compare the magnitudes of two numerical values.

We claim all modifications and variations coming within the spirit and scope of the subject matter claimed herein.

Regarding the above embodiments, the following appendices are provided by way of further illustration.

(Appendix 1) A machine control system comprising:

a waveform storage unit configured to store a second waveform generated by exponentiating a first waveform representing a command of an operation of a machine by a real number k other than 0 and 1; and
a machine control unit configured to operate the machine based on the second waveform.

(Appendix 2) The machine control system according to appendix 1, wherein
the real number k is 0.5 or more.

(Appendix 3) The machine control system according to appendix 1 or 2, further comprising a waveform generation unit configured to generate the second waveform based on the first waveform and store the generated second waveform into the waveform storage unit.

(Appendix 4) The machine control system according to appendix 3, wherein
the waveform generation unit is further configured to:
normalize the first waveform based on a target value of the machine;
exponentiate the normalized first waveform by the real number k to generate an intermediate waveform; and
generate the second waveform based on the intermediate waveform and the target value.

(Appendix 5) The machine control system according to appendix 3 or 4, wherein
the waveform generation unit is further configured to generate the second waveform such that a derivative of the second waveform includes all frequency components.

(Appendix 6) The machine control system according to any one of appendices 1 to 5, wherein
each of the first waveform and the second waveform represents a chronological change of a position of the machine, and
the machine control unit is further configured to operate the machine based on the second waveform.

(Appendix 7) The machine control system according to appendix 6, further comprising an integration unit configured to integrate a basic waveform representing at least one of velocity, acceleration, and jerk of the machine to generate the first waveform.

(Appendix 8) The machine control system according to any one of appendices 1 to 7, further comprising a system identification unit configured to identify a machine characteristic value indicating a characteristic of the machine, based on a response value indicating the operation of the machine by the machine control unit.

(Appendix 9) The machine control system according to any one of appendices 1 to 8, further comprising a gain adjustment unit configured to adjust a gain used for control by the machine control unit, based on a response value indicating the operation of the machine by the machine control unit.

(Appendix 10) A waveform generation device comprising:

a waveform generation unit configured to exponentiate a first waveform representing a command of an operation of a machine by a real number k other than 0 and 1 to generate a second waveform; and
a waveform storage unit configured to store the second waveform.

(Appendix 11) A waveform generation method executed by a waveform generation device comprising at least one processor, the method comprising:

> generating a second waveform by exponentiating a first waveform representing a command of an operation of a machine by a real number k other than 0 and 1; and
> storing the second waveform into a waveform storage unit.

(Appendix 12) A waveform generation program for causing a computer to execute:

> generating a second waveform by exponentiating a first waveform representing a command of an operation of a machine by a real number k other than 0 and 1; and
> store the second waveform into a waveform storage unit.

**Claims**

1. A machine control system (1) comprising:

   a waveform storage unit (12) configured to store a second waveform that is generated by exponentiating a first waveform by a real number, wherein the first waveform represents a command of an operation of a machine (2), and wherein the real number has a value other than 0 and 1; and
   a machine control unit (20) configured to operate the machine (2) based on the second waveform.

2. The machine control system (1) according to claim 1, wherein the real number is equal to or greater than 0.5.

3. The machine control system (1) according to claim 1 or 2, further comprising a waveform generation unit (11) configured to generate the second waveform based on the first waveform and store the generated second waveform into the waveform storage unit (12).

4. The machine control system (1) according to claim 3, wherein the waveform generation unit (11) is further configured to:
   normalize the first waveform based on a target value of the machine (2);
   exponentiate the normalized first waveform by the real number to generate an intermediate waveform; and
   generate the second waveform based on the intermediate waveform and the target value.

5. The machine control system (1) according to claim 4,

wherein the waveform generation unit (11) is further configured to:
normalize the first waveform by dividing the first waveform by the target value; and
generate the second waveform by multiplying the intermediate waveform by the target value.

6. The machine control system (1) according to claim 3, wherein the waveform generation unit (11) is further configured to:
   exponentiate the first waveform by the real number to generate an intermediate waveform;
   calculate a ratio of a target value of the machine to a value obtained by exponentiating the target value (2) by the real number; and
   multiply the intermediate waveform by the ratio to generate the second waveform.

7. The machine control system (1) according to any one of claims 3 to 6, wherein the waveform generation unit (11) is further configured to generate the second waveform such that a derivative of the second waveform includes all frequency components.

8. The machine control system (1) according to any one of claims 3 to 7, wherein the waveform generation unit (11) is further configured to generate the second waveform at least based on the first waveform in which a part of frequency components equals 0.

9. The machine control system (1) according to claim 8, wherein the waveform generation unit (11) is further configured to generate the second waveform based on the first waveform,
   wherein the first waveform represents a chronological change of a position of the machine (2), and
   wherein part of frequency components in a first derivative of the first waveform equals 0.

10. The machine control system (1) according to any one of claims 1 to 9,
    wherein each of the first waveform and the second waveform represents a chronological change of a position of the machine (2), and
    wherein the machine control unit (20) is further configured to operate the machine (2) by varying the position of the machine (2) according to the second waveform.

11. The machine control system (1) according to claim 10, further comprising an integration unit (11) configured to integrate a basic waveform representing at least one of velocity, acceleration, and jerk of the machine (2) to generate the first waveform.

12. The machine control system (1) according to any one of claims 1 to 11, further comprising a system identification unit (30) configured to identify a machine characteristic value indicating a characteristic of the machine (2), based on a response value indicating the operation of the machine (2) by the machine control unit (20).

13. The machine control system (1) according to any one of claims 1 to 12, further comprising a gain adjustment unit (40) configured to adjust a gain used for control by the machine control unit (20), based on a response value indicating the operation of the machine (2) by the machine control unit (20).

14. A waveform generation method executed by a waveform generation device (10) comprising at least one processor, the method comprising:

generating a second waveform by exponentiating a first waveform by a real number, wherein the first waveform represents a command of an operation of a machine (2), and wherein the real number has a value other than 0 and 1; and storing the second waveform into a storage (12).

15. A waveform generation program comprising instructions which, when the program is executed by a computer, cause the computer to carry out:

generating a second waveform by exponentiating a first waveform by a real number, wherein the first waveform represents a command of an operation of a machine (2), and wherein the real number has a value other than 0 and 1; and storing the second waveform into a storage (12).

## Fig.1

**Fig.2**

# Fig.3

S1

START

ACQUIRES FIRST FUNCTION INDICATING FIRST WAVEFORM — S11

EXPONENTIATE FIRST FUNCTION INDICATING FIRST WAVEFORM TO GENERATE SECOND FUNCTION INDICATING SECOND WAVEFORM — S12

STORE SECOND WAVEFORM OR SECOND FUNCTION INTO STORAGE UNIT — S13

CONTROL MACHINE BASED ON SECOND WAVEFORM — S14

EXECUTE SYSTEM IDENTIFICATION — S15

EXECUTE GAIN ADJUSTMENT — S16

END

# Fig.4

Europäisches
Patentamt

European
Patent Office

Office européen
des brevets

# EUROPEAN SEARCH REPORT

**Application Number**

EP 21 17 3036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/075670 A1 (AKIYAMA SHIGEKI [JP]) 5 April 2007 (2007-04-05) * abstract; figures 1-3 * * paragraph [0003] - paragraph [0008] * * paragraph [0153] - paragraph [0181] * ----- | 1-15 | INV. H02P21/14 H02P23/14 G05B13/02 |
| A | JP 2008 292288 A (MITSUBISHI ELECTRIC ENG) 4 December 2008 (2008-12-04) * abstract * ----- | 1,14,15 | |

**TECHNICAL FIELDS SEARCHED (IPC)**

H02P
G05B

The present search report has been drawn up for all claims

| Place of search | Date of completion of the search | Examiner |
|---|---|---|
| Munich | 14 October 2021 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 3036

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2021

| Patent document cited in search report | | Publication date | Patent family member(s) | | Publication date |
|---|---|---|---|---|---|
| US 2007075670 | A1 | 05-04-2007 | JP 2007086904 A<br>US 2007075670 A1 | | 05-04-2007<br>05-04-2007 |
| JP 2008292288 | A | 04-12-2008 | NONE | | |

EPO FORM P0459

For more details about this annex : see Official Journal of the European Patent Office, No. 12/82

**EP 3 916 999 A1**

## REFERENCES CITED IN THE DESCRIPTION

### Patent documents cited in the description

• JP 2008236990 A